# EUROPEAN PATENT SPECIFICATION

(11) **EP 4 072 079 B1**
(45) Date of publication and mention of the grant of the patent: **19.11.2025**
(21) Application number: 20897134.1
(22) Date of filing: 01.12.2020
(51) Int. Cl.: H04L 45/28, H04L 45/50, H04L 45/00

(54) **ANTI-FIBER BREAKAGE METHOD AND DEVICE FOR SEGMENT ROUTING TUNNEL, INGRESS NODE AND STORAGE MEDIUM**
VERFAHREN UND VORRICHTUNG ZUR VERHINDERUNG VON FASERBRÜCHEN FÜR SEGMENTROUTINGTUNNEL, EINGANGSKNOTEN UND SPEICHERMEDIUM
PROCÉDÉ ET DISPOSITIF ANTI-RUPTURE DE FIBRE POUR TUNNEL DE ROUTAGE DE SEGMENT, NOEUD D'ENTRÉE ET SUPPORT DE DONNÉES

(30) Priority: 05.12.2019 CN 201911234039
(43) Date of publication of application: 12.10.2022
(73) Proprietor: ZTE Corporation, Shenzhen, Guangdong 518057 (CN)
(72) Inventor: JIANG, Haiming, Shenzhen, Guangdong 518057 (CN)
(74) Representative: Savi, Massimiliano
(86) International application number: PCT/CN2020/133115
(87) International publication number: WO 2021/109997

(56) References cited:
- WO-A1-2019/062249
- WO-A1-2019/105066
- WO-A1-2021/043086
- WO-A1-2021/077972
- CN-A- 107 979 499
- CN-A- 109 218 176
- CN-A- 109 861 913
- CN-A- 110 086 712
- US-A1- 2016 173 366
- LI HUAWEI TECHNOLOGIES Z: "Comparison between Segment Routing and LDP/RSVP-TE; draft-li-spring-compare-sr-ldp-rsvpte-01.txt", COMPARISON BETWEEN SEGMENT ROUTING AND LDP/RSVP-TE; DRAFT-LI-SPRING-COMPARE-SR-LDP-RSVPTE-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 13 March 2016 (2016-03-13), pages 1 - 17, XP015111698

## Description

### TECHNICAL FIELD

The present application relates to wireless communication networks, for example, to an anti-fiber-breakage method and apparatus for a segment routing tunnel, an ingress node and a storage medium.

### BACKGROUND

Segment Routing (SR) is a protocol designed based on a concept of source routing to forward packets over networks. It is possible to control real-time and fast forwarding of data by specifying a set of ordered instruction lists at an ingress node, which is widely used in current communication systems. With the increasingly strict requirements for ultra-large bandwidth and ultra-low latency in communication systems, how to ensure the stability of SR tunnels has become a focus of discussion at present.

For example, in LI HUAWEI TECHNOLOGIES Z, "Comparison between Segment Routing and LDP/RSVP-TE; draft-li-spring-compare-sr-ldp-rsvpte-01 .txt", there are some existing technical scheme for the stability of SR tunnels. WO2019/105066A1 refers to a method for processing a route, which is used to carry an Internet Protocol Version 6 Segment Routing-based Virtual Private Network, SRV6-based VPN.

### SUMMARY

The present application provides an anti-fiber-breakage method and apparatus for a segment routing tunnel, an ingress node and a storage medium. The features of the anti-fiber-breakage method and apparatus for a segment routing tunnel, the ingress node and the storage medium according to embodiments of the present disclosure are set out in the appended set of claims.

As for the above-mentioned embodiments and other aspects of the present application, as well as implementations thereof, further explanation is provided in the Brief Description of Drawings, the Detailed Description and the Claims.

### BRIEF DESCRIPTION OF DRAWINGS

FIG. 1 is a schematic diagram of SR-TE tunnel data forwarding provided by an embodiment;
FIG. 2 is a schematic diagram of an SR-TE main path and backup path provided by an embodiment;
FIG. 3 is a schematic flowchart of an anti-fiber-breakage method for a segment routing tunnel provided by an embodiment;
FIG. 4 is a schematic diagram of SR-BE tunnel data forwarding provided by an embodiment;
FIG. 5 is a schematic diagram of a " 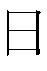 " shaped networking provided by an embodiment;
FIG. 6 is a schematic diagram of a " 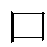 " shaped and cross networking provided by an embodiment;
FIG. 7 is a schematic structural diagram of an anti-fiber-breakage apparatus for a segment routing tunnel provided by an embodiment;
FIG. 8 is a schematic structural diagram of another anti-fiber-breakage apparatus for a segment routing tunnel provided by an embodiment; and
FIG. 9 is a schematic structural diagram of an ingress node provided by an embodiment.

### DETAILED DESCRIPTION

Embodiments of the present application will be described in detail below in conjunction with the accompanying drawings.

In the 5th-Generation (5G) mobile communication network, a carrier network needs to provide transmission channels with ultra-large bandwidth and ultra-low latency. The use of an SR forwarding technology may reduce the complexity of network connections, make service paths easier to maintain, and support flexible scheduling under the massive connection of 5G network. The SR forwarding technology, as one of the necessary technologies for Software Defined Network (SDN) deployment, is widely used by operators.

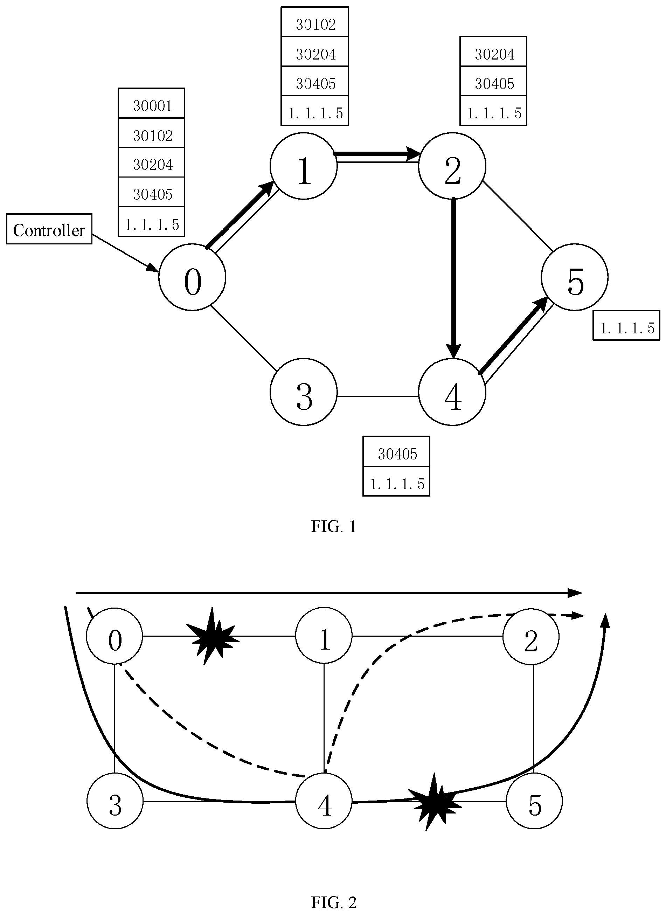

Segment Routing-Traffic Engineering (SR-TE) tunnel is a new TE tunnel technology using SR as a control protocol. SR-TE refers to a tunnel created by the SR protocol on the basis of the constraint attribute of TE. A controller is responsible for calculating a forwarding path of a tunnel and issuing a label stack strictly corresponding to the path to a forwarder. At an ingress node of the SR-TE tunnel, the forwarder may control the transmission path of data in a network according to the label stack. FIG. 1 is a schematic diagram of SR-TE tunnel data forwarding provided by an embodiment. As shown in FIG. 1, an ingress node is node 0, an egress node is node 5, and node 1, node 2, node 3 and node 4 are intermediate nodes. The forwarding path calculated by the controller is (30001, 30102, 30204, 30405), where 3 is the prefix of the tunnel, 1.1.1.5 is the Internet Protocol (IP) address, 30001 represents that data is sent from node 0 to node 1, 30102 represents that data is sent from node 1 to node 2, 30204 represents that data is sent from node 2 to node 4, and 30405 represents that data is sent from node 4 to node 5. The forwarding path is strictly topped by the controller as required, but as can be seen from FIG. 1, because there are too many layers of segment IDs (SIDs), the label stack will occupy a lot of space.

In an SR network, a path using an SR-TE technology with guaranteed quality of service (QoS) (referred to as an SR-TE main path for brevity) is usually configured for important services. Meanwhile, an additional hot-standby static protection path (referred to as an SR-TE backup path for brevity) is also configured, so as to further ensure the business stability. In response to detecting the failure of the SR-TE main path, services can be quickly switched to the SR-TE backup path to ensure that services are not interrupted. FIG. 2 is a schematic diagram of an SR-TE main path and backup path provided by an embodiment. The ingress node is node 0, the egress node is node 2, and node 1, node 3, node 4, and node 5 are intermediate nodes. As shown in FIG. 2, the SR-TE main path is a path from node 0 to node 1 and to node 2, and the SR-TE backup path is a path from node 0 to node 3 to node 4 to node 5 and to node 2. When both the SR-TE main path and the SR-TE backup path fail (as shown in FIG. 2, a link from node 0 and node 1 fails, and a link from node 4 to node 5 fails), in order to ensure that data can still be transmitted, in some cases, an escape path (a path as indicated by a dotted line in FIG. 2) is calculated based on an upper-layer protocol (i.e., a controller) to avoid multi-point failure (also known as double-fiber-breakage failure). However, it takes a long time for the upper-layer protocol to calculate the escape path, which is far from the carrier-grade protection requirements required by operators.

The embodiments of the present application provide a mobile communication network (including but not limited to the 5th-Generation (5G) mobile communication network). A network architecture of the network may include core network devices (such as UDM devices), network side devices (such as one or more types of base stations, transmission nodes, access nodes (APs), relays, Node Bs (NBs), Universal Terrestrial Radio Access (UTRA), Evolution Terrestrial Radio Access (EUTRA) etc.) and terminal devices (User Equipment (UE), user equipment data cards, relays, mobile devices, etc.). In the embodiments of the present application, an anti-fiber-breakage method and apparatus for a segment routing tunnel, an ingress node and a storage medium that can operate on the foregoing network architecture are provided, which can realize multi-level carrier-grade performance protection for links, thus ensuring the stability and timeliness of a system. The operating environment of the anti-fiber-breakage method for a segment routing tunnel provided in the embodiments of the present application is not limited to the foregoing network architecture.

Terms "system" and "network" are often used interchangeably in the present application. The following embodiments of the present application may be implemented independently, or may be implemented in combination with each other, which are not specifically limited in the embodiments of the present application.

In the following, the anti-fiber-breakage method and apparatus for a segment routing tunnel and their technical effects will be described.

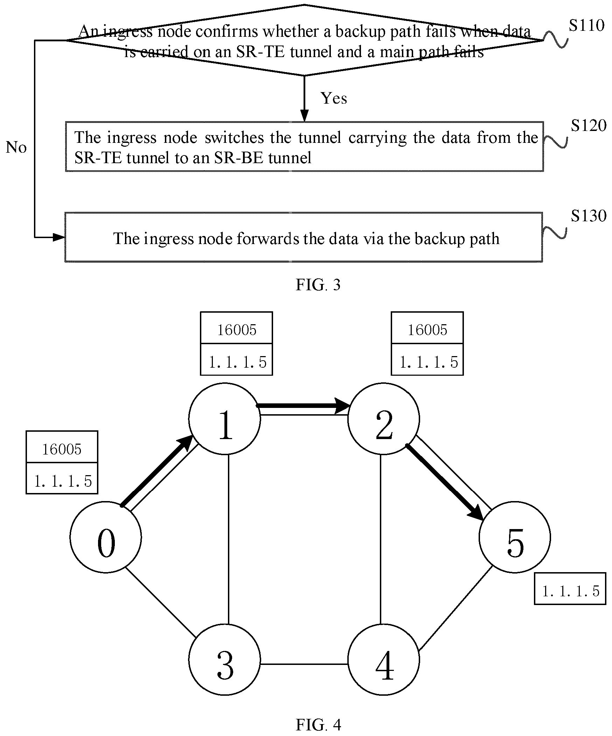

FIG. 3 is a schematic flowchart of an anti-fiber-breakage method for a segment routing tunnel provided by an embodiment. As shown in FIG. 1, the method provided in this embodiment is applicable to an ingress node, and the method includes steps S110 to S130.

At S110, when data is carried on an SR-TE tunnel and a main path fails, an ingress node confirms whether a backup path fails, where the main path and the backup path are both Label Switching Paths (LSPs) of the SR-TE tunnel.

Generally, the data is sent over the SR-TE tunnel by default. When the main path does not fail, the data is forwarded via the main path by default; and when the main path fails, the ingress node needs to confirm whether the backup path fails.

In an embodiment, the ingress node may detect the main path according to but not limited to the Label Switching Path-Bidirectional Forwarding Detection (LSP-BFD) technology to confirm whether the main path fails. For example, the LSP-BFD technology may be used to detect whether an LSP path fails. According to the LSP-BFD technology, detection packets are sent periodically, and if no reply message of the detection packets is received after sending the detection packets for a certain number of times, it is considered that the detection path fails.

In an embodiment, the ingress node may detect the backup path according to but not limited to the Traffic Engineering-Bidirectional Forwarding Detection (TE-BFD) technology to confirm whether the backup path fails. For example, the TE-BFD technology may be used to detect whether a TE path fails. The TE-BFD technology can include BFD for TE Tunnel and BFD for TE CR-LSP. For example, BFD detects the connectivity of a data protocol between two systems on the same path. This path may be a physical link or a logical link, including a TE tunnel.

Since there is no protocol established for the SR-TE tunnel, an LSP will be established successfully as long as the label stack is issued, and a protocol down situation will not occur in the LSP except the label stack is canceled. Therefore, LSP failure detection of the SR-TE tunnel needs to depend on the deployment of Bidirectional Forwarding Detection (BFD).

At S120, in response to the backup path failing, the ingress node switches the tunnel carrying the data from the SR-TE tunnel to the segment routing-best effort (SR-BE) tunnel.

The SR-BE tunnel refers to a label switching path established by using an SR technology, i.e., an optimal SR LSP calculated by using the shortest path algorithm and based on the interior gateway protocol (IGP) by guiding data packet forwarding through Prefix or Node Segment. It can be realized by using the extended IGP protocol Intermediate system to intermediate system (IS-IS) and Open Shortest Path First (OSPF) Type-length-value (TLV). Under an existing distribution topology and reachability information, SR information is distributed in an IGP domain. Each node in the IGP domain uses the additional SR information, together with its calculated network topology view and prefix reachability, to issue forwarding table entries.

FIG. 4 is a schematic diagram of SR-BE tunnel data forwarding provided by an embodiment. As shown in FIG. 4, an ingress node is node 0, an egress node is node 5, and node 1, node 2, node 3 and node 4 are intermediate nodes. 16 is the prefix of the tunnel, 1.1.1.5 is the IP address, and 16005 represents that the data will eventually be transmitted to node 5. When the ingress node 0 receives the data, it is known through analysis that the data will eventually be transmitted to the node 5. The node transmits the data to the next node 1 according to an optimal path calculated by the shortest path algorithm. The node 1 also transmits the data to the next node 2 according to an optimal path calculated by the shortest path algorithm. Similarly, the node 2 transmits the data to the egress node 5 according to an optimal path calculated by the shortest path algorithm.

In this way, when both the main path and the backup path fail, the ingress node switches the tunnel carrying the data from the SR-TE tunnel to the SR-BE tunnel, which ensures that data forwarding no longer needs to depend on the computing performance of the protocol, and realizes multi-level carrier-grade performance protection for links, thus ensuring the stability and timeliness of the system.

In an embodiment, the method for the ingress node to switch the tunnel carrying the data from the SR-TE tunnel to the SR-BE tunnel may include: switching, by the ingress node, a tunnel switching flag corresponding to a tunnel identifier (ID) of the SR-TE tunnel from a first preset value to a second preset value according to the tunnel ID, where the tunnel switching flag with the first preset value indicates that the data is carried on the SR-TE tunnel, and the tunnel switching flag with the second preset value indicates that the data is carried on the SR-BE tunnel.

For example, a virtual private network (VPN) service is carried on a tunnel, and a service prefix table generally includes a routing table or a media access control (MAC) table, etc. The public and private networks are linked by a NextHop table (NH table). The NH table stores public network information, such as the next level SR-TE tunnel information (i.e. SR-TE forwarding index), the remote border gateway protocol (BGP) neighbor IP address (also known as peer IP) and the tunnel switching flag. The first preset value (usually the default value) of the tunnel switching flag is set to 0, that is, the tunnel switching flag with a value of 0 indicates that the data is carried on the SR-TE tunnel.

When the ingress node is about to switch the tunnel carrying the data from the SR-TE tunnel to the SR-BE tunnel, the ingress node searches the NH table according to the tunnel ID of the SR-TE tunnel (a mapping relationship between the tunnel ID of the SR-TE tunnel and the NH table is stored in the ingress node), and switches the tunnel switching flag from the first preset value to the second preset value. The second preset value is usually 1, which indicates that the data is carried on the SR-BE tunnel.

It can be understood that the values of the first preset value and the second preset value of the tunnel switching flag can be set according to actual conditions. For example, the first preset value of the tunnel switching flag can also be set to 1, that is, the tunnel switching flag with a value of 1 indicates that the data is carried on the SR-TE tunnel; the second preset value of the tunnel switching flag is set to 0, that is, the tunnel switching flag with a value of 0 indicates that the data is carried on the SR-BE tunnel.

In an embodiment, the SR-BE tunnel may be configured with topology-independent loop-free alternate FRR (TI-LFA FRR) to provide link and node protection for the SR-BE tunnel. When a link or node fails, the data will be quickly switched to the backup path and continue to be forwarded, thus avoiding data loss to the greatest extent.

At S130, in response to the backup path not failing, the ingress node forwards the data via the backup path.

In response to the backup path not failing, the ingress node does not need to switch the tunnel carrying the data from the SR-TE tunnel to the SR-BE tunnel, and only forwards the data via the backup path.

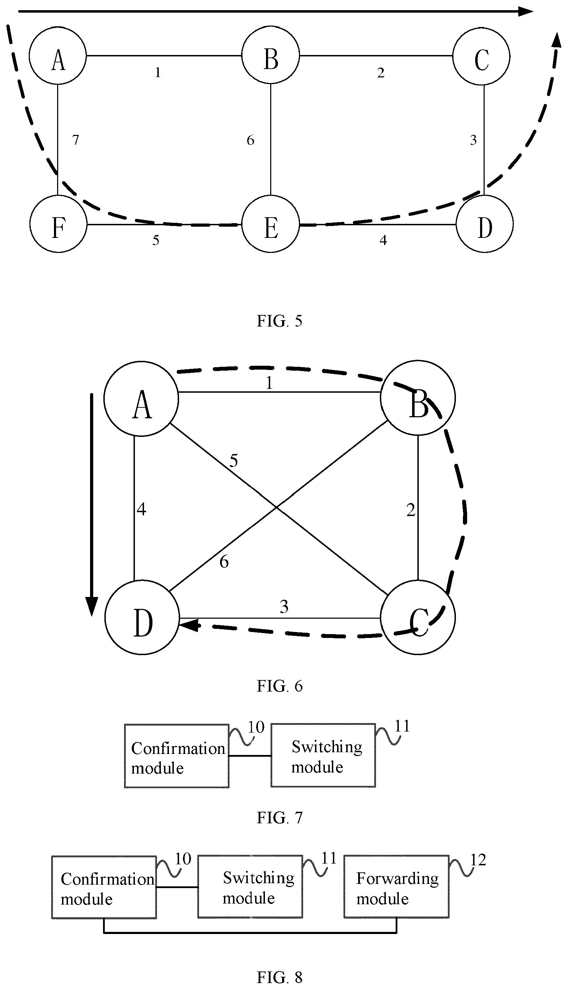

For example, FIG. 5 is a schematic diagram of a " 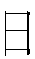 " shaped networking provided by an embodiment. As shown in FIG. 5, an ingress node is node A, an egress node is node C, and node B, node D, node E and node F are intermediate nodes. A path between node A and node B is called path 1, a path between node B and node C is called path 2, a path between node C and node D is called path 3, a path between node D and node E is called path 4, a path between node E and node F is called path 5, a path between node E and node B is called path 6, and a path between node F and node A is called path 7. The main paths are paths indicated by solid arrows, namely Path 1 and Path 2; and the backup paths are paths indicated by dotted arrows, namely Path 7, Path 5, Path 4 and Path 3. The scheme provided in the present application can solve the multi-point failure (also called double-fiber-breakage failure) caused by simultaneous failures of Paths 1 and 4, Paths 1 and 3, Paths 2 and 5, and Paths 2 and 7, which ensures that data forwarding no longer needs to depend on the computing performance of the protocol, and realizes multi-level carrier-grade performance protection for links, thus ensuring the stability and timeliness of the system.

For another example, FIG. 6 is a schematic diagram of a " 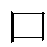 " shaped and cross networking provided by an embodiment. As shown in FIG. 6, an ingress node is node A, an egress node is node D, and node B and node C are intermediate nodes. A path between node A and node B is called path 1, a path between node B and node C is called path 2, a path between node C and node D is called path 3, a path between node D and node A is called path 4, a path between node A and node C is called path 5, and a path between node B and node D is called path 6. The main path is a path indicated by a solid arrow, namely path 4; and the backup paths are paths indicated by dotted arrows, namely path 1, path 2, and path 3. The scheme provided in the present application can solve the multi-point failure (also called double-fiber-breakage failure) caused by simultaneous failures of Paths 1 and 4, Paths 2 and 4, and Paths 3 and 4, which ensures that data forwarding no longer needs to depend on the computing performance of the protocol, and realizes multi-level carrier-grade performance protection for links, thus ensuring the stability and timeliness of the system.

An embodiment of the present application provides an anti-fiber-breakage method for a segment routing tunnel. The method includes: confirming, by an ingress node, whether a backup path fails when data is carried on a Segment Routing-Traffic Engineering (SR-TE) tunnel and a main path fails, where both the main path and the backup path are Label Switching Paths (LSPs) of the SR-TE tunnel; and switching, by the ingress node, the tunnel carrying the data from the SR-TE tunnel to a Segment Routing Best Effort (SR-BE) tunnel in response to the backup path failing. The present application can realize multi-level carrier-grade performance protection for links, thus ensuring the stability and timeliness of a system.

FIG. 7 is a schematic structural diagram of an anti-fiber-breakage apparatus for a segment routing tunnel provided by an embodiment. The anti-fiber breakage apparatus for a segment routing tunnel may be configured in an ingress node. As shown in FIG. 7, the apparatus includes a confirmation module 10 and a switching module 11.

The confirmation module 10 is configured to confirm whether a backup path fails when data is carried on a Segment Routing-Traffic Engineering (SR-TE) tunnel and a main path fails, where both the main path and the backup path are Label Switching Paths (LSPs) of the SR-TE tunnel.

The switching module 11 is configured to switch the tunnel carrying the data from the SR-TE tunnel to a Segment Routing Best Effort (SR-BE) tunnel in response to the backup path failing.

The anti-fiber breakage apparatus for a segment routing tunnel provided in this embodiment is to implement the anti-fiber breakage method for a segment routing tunnel in the foregoing embodiments. The anti-fiber-breakage apparatus for a segment routing tunnel provided in this embodiment has similar implementation principle and technical effect, which will not be repeated here.

In an embodiment, the confirmation module 10 is configured to detect the backup path according to a Traffic Engineering-Bidirectional Forwarding Detection (TE-BFD) technology to confirm whether the backup path fails, after confirming that the main path fails according to a Label Switching Path-Bidirectional Forwarding Detection (LSP-BFD) technology.

In an embodiment, the switching module 11 is configured to switch a tunnel switching flag corresponding to a tunnel identifier (ID) of the SR-TE tunnel from a first preset value to a second preset value according to the tunnel ID, wherein the tunnel switching flag with the first preset value indicates that the data is carried on the SR-TE tunnel, and the tunnel switching flag with the second preset value indicates that the data is carried on the SR-BE tunnel.

In an embodiment, with reference to FIG. 7, FIG. 8 is a schematic structural diagram of another anti-fiber-breakage apparatus for a segment routing tunnel provided by an embodiment, which further includes: a forwarding module 12.

The forwarding module 12 is configured to forward the data via the backup path in response to the backup path not failing.

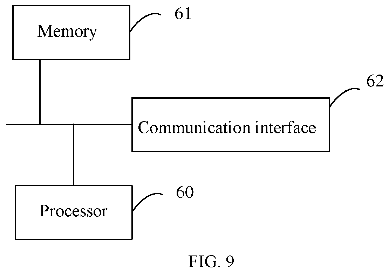

An embodiment of the present application further provides an ingress node, including: a processor which is configured to carry out the method as provided in any embodiment of the present application when computer programs are executed. FIG. 9 is a schematic structural diagram of an ingress node provided by an embodiment. As shown in FIG. 9, the ingress node includes a processor 60, a memory 61 and a communication interface 62. There may be one or more processors 60 in the ingress node, and one processor 60 is taken as an example in FIG. 9. The processor 60, the memory 61, and the communication interface 62 in the ingress node may be connected by a bus or in other ways, and the bus connection is taken as an example in FIG. 9. The bus represents one or more of several types of bus structures, including a memory bus or memory controller, a peripheral bus, a graphics acceleration port, a processor, or a local bus using any of a variety of bus structures.

As a computer-readable storage medium, the memory 61 may be configured to store software programs, computer-executable programs, and modules, such as program instructions/modules corresponding to the method in the embodiments of the present application. The processor 60 runs the software programs, instructions and modules stored in the memory 61, thus implementing at least one functional application and data processing of the ingress node, i.e., implementing the anti-fiber-breakage method for a segment routing tunnel.

The memory 61 may include a program storage region and a data storage region. The program storage region may store an operating system, an application program required for at least one function. The data storage region may store data created with the use of the ingress node, and the like. Additionally, the memory 61 may include a high-speed random-access memory, and may also include a non-volatile memory, such as at least one magnetic disk memory device, flash memory device, or other non-volatile solid-state memory device. In some instances, the memory 61 may include a memory provided remotely from the processor 60. Such remote memories may be connected to the ingress node over a network. Instances of the above-mentioned networks include, but are not limited to, the Internet, an intranet, a local area network, a mobile communication network, and combinations thereof.

The communication interface 62 may be configured for reception and transmission of data.

An embodiment of the present application further provides a computer-readable medium storing computer programs, which, when executed by a processor, cause to carry out the method as provided in any embodiment of the present application.

The computer storage medium in the embodiment of the present application may adopt any combination of one or more computer-readable media. The computer-readable medium may be a computer-readable signal medium or a computer-readable storage medium. The computer-readable storage medium may be, for example, but not limited to, an electrical, magnetic, optical, electromagnetic, infrared, or semiconductor system, apparatus or device, or a combination of any of the foregoing. The computer-readable storage media include (non-exhaustively): electrical connections with one or more wires, portable computer disks, hard disks, random access memories (RAMs), read-only memories (ROMs), electrically erasable programmable read-only memories (EPROMs), flash memories, optical fibers, portable compact disc read-only memories (CD-ROMs), optical memory devices, magnetic memory devices, or any suitable combination of the foregoing. In the present application, the computer-readable storage medium may be any tangible medium that contains or stores programs which can be used by or in conjunction with an instruction execution system, apparatus, or device.

The computer-readable signal medium may include a data signal propagated in a baseband or as part of a carrier wave. Computer-readable program codes are carried in the data signal. Such propagated data signal may take a variety of forms, including but not limited to an electromagnetic signal, an optical signal, or any suitable combination of the foregoing. The computer-readable signal medium may also be any computer-readable medium other than a computer-readable storage medium that can send, propagate, or transmit programs for use by or in connection with the instruction execution system, apparatus, or device.

Program codes contained in the computer-readable medium may be transmitted using any suitable medium, including but not limited to wireless, wire, optical fiber cable, radio frequency (RF), and other means, or any suitable combination of the foregoing.

Computer program codes for performing the operations of the present application may be written in one or more programming languages or a combination of the programming languages, which include object-oriented programming languages-such as Java, Smalltalk, C++, Ruby, Go, and also include conventional procedural programming languages, such as "C" language or similar programming languages. The program codes may be executed completely on a user's computer, partially on a user's computer, as a stand-alone software package, partially on a user's computer and partially on a remote computer, or completely on a remote computer or server. In the case of a remote computer, the remote computer may be connected to a user's computer through any kind of network, including a Local Area Network (LAN) or a Wide Area Network (WAN), or it may be connected to an external computer (for example, connected through the Internet by using an Internet service provider).

As will be understood by those having ordinary skills in the art, the term "user terminal" encompasses any suitable type of wireless user equipment, such as mobile telephones, portable data processing apparatuses, portable web browsers or vehicle-mounted mobile stations.

In general, the embodiments of the present application may be implemented in hardware or special-purpose circuits, software, logic, or any combinations thereof. For example, some aspects may be implemented in hardware, while other aspects may be implemented in firmware or software that may be executed by a controller, microprocessor or other computing apparatus, though the present application is not limited thereto.

Embodiments of the present application may be implemented by the execution of computer program instructions by a data processor of a mobile apparatus, e.g. in a processor entity, or by hardware, or by a combination of software and hardware. Computer program instructions may be assembly instructions, instruction set architecture (ISA) instructions, machine instructions, machine-dependent instructions, microcode, firmware instructions, state setting data, or source code or object code written in any combination of one or more programming languages.

The block diagrams of any logic flow in the drawings of the present application may represent procedure steps, or may represent interconnected logic circuits, modules and functions, or may represent a combination of procedure steps and logic circuits, modules and functions. Computer programs may be stored in a memory. The memory may be of any type suitable for a local technical environment and may be implemented using any suitable data storage technology, such as but not limited to, a read only memory (ROM), a random-access memory (RAM), an optical memory apparatus and system (digital versatile disk DVD or CD), etc. The computer-readable medium may include a non-transitory storage medium. The data processor may be of any type suitable for a local technical environment, such as but not limited to a general-purpose computer, a special-purpose computer, a microprocessor, a digital signal processor (DSP), an application specific integrated circuit (ASIC), a programmable logic device (FGPA) and a processor based on a multicore processor architecture.

## Claims

1. An anti-fiber-breakage method for a segment routing tunnel, comprising:
confirming, by an ingress node, whether a backup path fails when data is carried on a Segment Routing-Traffic Engineering, SR-TE, tunnel and a main path fails, wherein both the main path and the backup path are Label Switching Paths, LSPs, of the SR-TE tunnel (S110);
switching, by the ingress node, the tunnel carrying the data from the SR-TE tunnel to a Segment Routing Best Effort, SR-BE, tunnel in response to the backup path failing (S120) ; and
switching, by the ingress node, a tunnel switching flag corresponding to a tunnel IDentifier, ID, of the SR-TE tunnel from a first preset value to a second preset value according to the tunnel ID;
wherein the tunnel switching flag with the first preset value indicates that the data is carried on the SR-TE tunnel, and the tunnel switching flag with the second preset value indicates that the data is carried on the SR-BE tunnel; and
wherein the SR-BE tunnel is configured with topology-independent loop-free alternate FRR.

2. The method of claim 1, wherein the confirming, by the ingress node, whether the backup path fails comprises:
detecting the backup path by the ingress node according to a Traffic Engineering-Bidirectional Forwarding Detection, TE-BFD, technology to confirm whether the backup path fails, after the ingress node confirms that the main path fails according to a Label Switching Path-Bidirectional Forwarding Detection, LSP-BFD, technology.

3. The method of claim 1 or 2, further comprising:
forwarding, by the ingress node, the data via the backup path in response to the backup path not failing (S130).

4. An anti-fiber-breakage apparatus for a segment routing tunnel, comprising a confirmation module (10) and a switching module (11), wherein
the confirmation module (10) is configured to confirm whether a backup path fails when data is carried on a Segment Routing-Traffic Engineering, SR-TE, tunnel and a main path fails, wherein both the main path and the backup path are Label Switching Paths, LSPs, of the SR-TE tunnel; and
the switching module (11) is configured to switch the tunnel carrying the data from the SR-TE tunnel to a Segment Routing Best Effort, SR-BE, tunnel in response to the backup path failing, and switch a tunnel switching flag corresponding to a tunnel IDentifier, ID, of the SR-TE tunnel from a first preset value to a second preset value according to the tunnel ID;
wherein the tunnel switching flag with the first preset value indicates that the data is carried on the SR-TE tunnel, and the tunnel switching flag with the second preset value indicates that the data is carried on the SR-BE tunnel; and
wherein the SR-BE tunnel is configured with topology-independent loop-free alternate FRR.

5. The apparatus of claim 4, wherein
the confirmation module (10) is configured to detect the backup path according to a traffic Engineering-Bidirectional Forwarding Detection, TE-BFD, technology to confirm whether the backup path fails, after confirming that the main path fails according to a Label Switching Path-Bidirectional Forwarding Detection, LSP-BFD, technology.

6. The apparatus of claim 4 or 5, further comprising a forwarding module (12), wherein
the forwarding module (12) is configured to forward the data via the backup path in response to the backup path not failing.

7. An ingress node, comprising a processor configured to execute computer programs to carry out the anti-fiber-breakage method for a segment routing tunnel of any of claims 1 to 3.

8. A computer-readable storage medium, storing computer programs comprising instructions which, when executed by a processor, cause the processor to carry out the anti-fiber-breakage method for a segment routing tunnel of any of claims 1 to 3.

## Patentansprüche

1. Verfahren zur Verhinderung von Faserbrüchen für einen Segment-Routing-Tunnel, umfassend:
Bestätigen durch einen Eingangsknoten, ob ein Reservepfad ausfällt, wenn Daten auf einem Segment-Routing-Traffic-Engineering-Tunnel, SR-TE-Tunnel, befördert werden und ein Hauptpfad ausfällt, wobei sowohl der Hauptpfad als auch der Reservepfad Label-Switching-Pfade, LSPs, des SR-TE-Tunnels sind (S110);
Umschalten des Tunnels, der die Daten von dem SR-TE-Tunnel befördert, durch den Eingangsknoten auf einen Segment-Routing-Best-Effort-Tunnel, SR-BE-Tunnel, als Reaktion darauf, dass der Reservepfad ausfällt (S120); und
Umschalten eines Tunnelumschaltflags, das einer Tunnelkennung, Tunnel-ID, des SR-TE-Tunnels entspricht, durch den Eingangsknoten von einem ersten voreingestellten Wert auf einen zweiten voreingestellten Wert gemäß der Tunnel-ID;
wobei das Tunnelumschaltflag mit dem ersten voreingestellten Wert angibt, dass die Daten auf dem SR-TE-Tunnel befördert werden, und das Tunnelumschaltflag mit dem zweiten voreingestellten Wert angibt, dass die Daten auf dem SR-BE-Tunnel befördert werden; und
wobei der SR-BE-Tunnel mit topologieunabhängiger Loop-Free-Alternate-FRR konfiguriert ist.

2. Verfahren nach Anspruch 1, wobei das Bestätigen durch den Eingangsknoten, ob der Reservepfad ausfällt, Folgendes umfasst:
Detektieren des Reservepfads durch den Eingangsknoten gemäß einer Traffic-Engineering-Bidirectional-Forwarding-Detection-Technologie, TE-BFD-Technologie, um zu bestätigen, ob der Reservepfad ausfällt, nachdem der Eingangsknoten gemäß einer Label-Switching-Path-Bidirectional-Forwarding-Detection-Technologie, LSP-BFD-Technologie, bestätigt, dass der Hauptpfad ausfällt.

3. Verfahren nach Anspruch 1 oder 2, ferner umfassend:
Weiterleiten der Daten durch den Eingangsknoten über den Reservepfad als Reaktion darauf, dass der Reservepfad nicht ausfällt (S130).

4. Einrichtung zur Verhinderung von Faserbrüchen für einen Segment-Routing-Tunnel, umfassend ein Bestätigungsmodul (10) und ein Umschaltmodul (11), wobei
das Bestätigungsmodul (10) dazu konfiguriert ist, zu bestätigen, ob ein Reservepfad ausfällt, wenn Daten auf einem Segment-Routing-Traffic-Engineering-Tunnel, SR-TE-Tunnel, befördert werden und ein Hauptpfad ausfällt, wobei sowohl der Hauptpfad als auch der Reservepfad Label-Switching-Pfade, LSPs, des SR-TE-Tunnels sind; und
das Umschaltmodul (11) dazu konfiguriert ist, den Tunnel, der die Daten von dem SR-TE-Tunnel befördert, als Reaktion darauf, dass der Reservepfad ausfällt, auf einen Segment-Routing-Best-Effort-Tunnel, SR-BE-Tunnel, umzuschalten und ein Tunnelumschaltflag, das einer Tunnelkennung, Tunnel-ID, des SR-TE-Tunnels entspricht, gemäß der Tunnel-ID von einem ersten voreingestellten Wert auf einen zweiten voreingestellten Wert umzuschalten;
wobei das Tunnelumschaltflag mit dem ersten voreingestellten Wert angibt, dass die Daten auf dem SR-TE-Tunnel befördert werden, und das Tunnelumschaltflag mit dem zweiten voreingestellten Wert angibt, dass die Daten auf dem SR-BE-Tunnel befördert werden; und
wobei der SR-BE-Tunnel mit topologieunabhängiger Loop-Free-Alternate-FRR konfiguriert ist.

5. Einrichtung nach Anspruch 4, wobei
das Bestätigungsmodul (10) dazu konfiguriert ist, den Reservepfad gemäß einer Traffic-Engineering-Bidirectional-Forwarding-Detection-Technologie, TE-BFD-Technologie, zu detektieren, um zu bestätigen, ob der Reservepfad ausfällt, nachdem gemäß einer Label-Switching-Path-Bidirectional-Forwarding-Detection-Technologie, LSP-BFD-Technologie, bestätigt wurde, dass der Hauptpfad ausfällt.

6. Einrichtung nach Anspruch 4 oder 5, ferner umfassend ein Weiterleitungsmodul (12), wobei
das Weiterleitungsmodul (12) dazu konfiguriert ist, die Daten als Reaktion darauf, dass der Reservepfad nicht ausfällt, über den Reservepfad weiterzuleiten.

7. Eingangsknoten, umfassend einen Prozessor, der dazu konfiguriert ist, Computerprogramme auszuführen, um das Verfahren zur Verhinderung von Faserbrüchen für einen Segment-Routing-Tunnel nach einem der Ansprüche 1 bis 3 durchzuführen.

8. Computerlesbares Speichermedium, das Computerprogramme speichert, die Anweisungen umfassen, die, wenn sie durch einen Prozessor ausgeführt werden, bewirken, dass der Prozessor das Verfahren zur Verhinderung von Faserbrüchen für einen Segment-Routing-Tunnel nach einem der Ansprüche 1 bis 3 durchführt.

## Revendications

1. Procédé anti-rupture de fibre pour un tunnel de routage de segment, comprenant :
le fait de confirmer, par un nœud d'entrée, si un chemin de sauvegarde échoue lorsque des données sont transportées sur un tunnel d'ingénierie de trafic de segment, SR-TE, et un chemin principal échoue, dans lequel le chemin principal et le chemin de sauvegarde sont tous deux des chemins de commutation d'étiquette, LSP, du tunnel SR-TE (S110) ;
la commutation, par le nœud d'entrée, du tunnel transportant les données du tunnel SR-TE vers un tunnel de meilleur effort de routage de segment, SR-BE, en réponse à l'échec du chemin de sauvegarde (S120) ; et
la commutation, par le nœud d'entrée, d'un indicateur de commutation de tunnel correspondant à un identifiant, ID, de tunnel du tunnel SR-TE d'une première valeur prédéfinie vers une seconde valeur prédéfinie selon l'ID de tunnel ;
dans lequel l'indicateur de commutation de tunnel avec la première valeur prédéfinie indique que les données sont transportées sur le tunnel SR-TE, et l'indicateur de commutation de tunnel avec la seconde valeur prédéfinie indique que les données sont transportées sur le tunnel SR-BE ; et
dans lequel le tunnel SR-BE est configuré avec un FRR alternatif sans boucle indépendant de la topologie.

2. Procédé de la revendication 1, dans lequel le fait de confirmer, par le nœud d'entrée, si le chemin de sauvegarde échoue comprend :
la détection du chemin de sauvegarde par le nœud d'entrée selon une technologie de détection de transfert bidirectionnel d'ingénierie de trafic, TE-BFD, pour confirmer si le chemin de sauvegarde échoue, après la confirmation, par le nœud d'entrée, du fait que le chemin principal échoue selon une technologie de détection de transfert bidirectionnel de chemin de commutation d'étiquette, LSP-BFD.

3. Procédé de la revendication 1 ou 2, comprenant en outre :
la transmission, par le nœud d'entrée, des données par l'intermédiaire du chemin de sauvegarde en réponse au fait que le chemin de sauvegarde n'échoue pas (S130).

4. Appareil anti-rupture de fibre pour un tunnel de routage de segment, comprenant un module de confirmation (10) et un module de commutation (11), dans lequel
le module de confirmation (10) est configuré pour confirmer si un chemin de sauvegarde échoue lorsque des données sont transportées sur un tunnel d'ingénierie de trafic de segment, SR-TE, et un chemin principal échoue, dans lequel le chemin principal et le chemin de sauvegarde sont tous deux des chemins de commutation d'étiquette, LSP, du tunnel SR-TE ; et
le module de commutation (11) est configuré pour commuter le tunnel transportant les données du tunnel SR-TE vers un tunnel de meilleur effort de routage de segment, SR-BE, en réponse à l'échec du chemin de sauvegarde, et pour commuter un indicateur de commutation de tunnel correspondant à un identifiant, ID, de tunnel du tunnel SR-TE d'une première valeur prédéfinie vers une seconde valeur prédéfinie selon l'ID de tunnel ;
dans lequel l'indicateur de commutation de tunnel avec la première valeur prédéfinie indique que les données sont transportées
sur le tunnel SR-TE, et l'indicateur de commutation de tunnel avec la seconde valeur prédéfinie indique que les données sont transportées sur le tunnel SR-BE ; et
dans lequel le tunnel SR-BE est configuré avec un FRR alternatif sans boucle indépendant de la topologie.

5. Appareil de la revendication 4, dans lequel le module de confirmation (10) est configuré pour détecter le chemin de sauvegarde selon une technologie de détection de transfert bidirectionnel d'ingénierie de trafic, TE-BFD, pour confirmer si le chemin de sauvegarde échoue, après avoir confirmé que le chemin principal échoue selon une technologie de détection de transfert bidirectionnel de chemin de commutation d'étiquette, LSP-BFD.

6. Appareil de la revendication 4 ou 5, comprenant en outre un module de transfert (12), dans lequel
le module de transmission (12) est configuré pour transmettre les données par l'intermédiaire du chemin de sauvegarde en réponse au fait que le chemin de sauvegarde n'échoue pas.

7. Nœud d'entrée, comprenant un processeur configuré pour exécuter des programmes informatiques pour mettre en œuvre le procédé anti-rupture de fibre pour un tunnel de routage de segment de l'une quelconque des revendications 1 à 3.

8. Support de stockage lisible par ordinateur, stockant des programmes informatiques comprenant des instructions qui, lorsqu'elles sont exécutées par un processeur, amènent le processeur à mettre en œuvre le procédé anti-rupture de fibre pour un tunnel de routage de segment de l'une quelconque des revendications 1 à 3.
